# EUROPÄISCHE PATENTANMELDUNG

(11) **EP 1 059 105 A2**
(43) Veröffentlichungstag der Anmeldung: **13.12.2000**
(21) Anmeldenummer: 00111048.5
(22) Anmeldetag: 31.05.2000
(51) Int. Cl.: B01D 17/025, B01D 17/04, B01D 17/022, B01D 17/12

(54) **Verfahren und Vorrichtung zur Trennung von mehrphasigen Lösemittelgemischen mit geringen Dichteunterschieden**

(30) Priorität: 09.06.1999 DE 19926313
(71) Anmelder: SATEC GmbH, 53619 Rheinbreitbach (DE)
(72) Erfinder: Saal, Hans-Udo, 53619 Rheinbreitbach (DE); Saal, Ralf Matthias, 53619 Rheinbreitbach (DE)
(74) Vertreter: Beckmann, Jürgen

(57) **Zusammenfassung**

Die Erfindung betrifft eine Vorrichtung zur Trennung mehrphasiger wasserhaltiger Lösemittelgemische mit einem oder zwei Schwerkraftabscheidern (4, 16) und deren Verwendung, sowie ein Verfahren zur Trennung mehrphasiger wasserhaltiger Lösemittelgemische. Mit der erfindungsgemäßen Vorrichtung ist es möglich, auch mehrphasige Lösemittelgemische mit geringen Dichteunterschieden aufzutrennen. Zu diesem Zweck ist stromaufwärts vom ersten Schwerkraftabscheider (4) zumindest ein Koaleszenzabscheider (1) vorgesehen.

## Beschreibung

Die Erfindung betrifft eine Vorrichtung zur Trennung mehrphasiger wasserhaltiger Lösemittelgemische mit einem Schwerkraftabscheider und deren Verwendung, sowie ein Verfahren zur Trennung mehrphasiger wasserhaltiger Lösemittelgemische.

Bei industriellen Reinigungsprozessen verschiedener Art treten Mischungen von polaren (Wasser) und nicht polaren Lösemitteln (organische Lösemittel) auf, die einer Trennung bedürfen. Ein Beispiel hierfür sind Textilreinigungsanlagen für die chemische Reinigung. Diese arbeiten überwiegend mit nicht polaren organischen Lösemitteln wie halogenierten oder nicht halogenierten Kohlenwasserstoffen, z.B. Tetrachlorethen (Per) oder isopraffinischen Kohlenwasserstoffen (KWL).

Beim Trocknen der gereinigten Textilien wird das Lösemittel im Warmluftstrom verdampft und anschließend in einem Kondensator auskondensiert. Dabei wird neben dem organischen Lösemittel auch Wasser mitgeschleppt, das sich im Kondensat als zweite Phase neben dem organischen Lösemittel befindet. Um das Lösemittel wieder für die chemische Textilreinigung verwenden zu können, muss die Wasserphase abgetrennt werden.

Dasselbe trifft bei der Aufarbeitung der für die Textilreinigung verwendeten verschmutzten organischen Lösemittel durch Destillation zu. Auch hier muss vor der erneuten Verwendung des organischen Lösemittels die Wasserphase abgetrennt werden.

Schließlich trifft dasselbe auch für die Aufarbeitung verschmutzter organischer Lösemittel durch Destillation in anderen Anwendungsgebieten neben der chemischen Reinigung zu. Auch hier muss oft im Anschluss an die Destillation und vor der erneuten Verwendung des organischen Lösemittels die Wasserphase abgetrennt werden.

Die Abtrennung des Wassers erfolgt üblicherweise in Schwerkraftabscheidern. Durch die unterschiedliche Dichte von organischem Lösemittel und Wasser, die sich praktisch nicht ineinander lösen, trennt sich im Abscheider das Wasser vom organischen Lösemittel und setzt sich bei höherer Dichte am Boden ab bzw. schwimmt bei niedrigerer Dichte auf dem Lösemittel auf und kann abgeleitet werden. Dieses Vorgehen ist bei den in der Textilreinigung gebräuchlichen Lösemitteln wie Tetrachlorethen (Per) mit einer Dichte von 1620 kg/m³ (bei 20 °C) sowie Kohlenwasserstofflösemitteln (KWL) mit einer Dichte von ca. 780 kg/m³ (bei 15 °C) problemlos und wirksam durchführbar.

Die Verwendung weiterer, für die Entfernung spezieller Verschmutzungsarten geeigneter Lösemittel (z.B. aliphatische Glykolether) scheitert u.a. daran, dass diese nur sehr geringe Dichteunterschiede zu Wasser (kleiner 100 kg/m³) aufweisen und damit die verfahrenstechnisch erforderliche Trennung des kondensierten organischen Lösemittels vom Wasser nach dem gegenwärtigen Stand der Technik von Wasserabscheidern nicht gewährleistet ist. Damit ist die Verwendung solcher Lösemittelarten, die für die Reinigung bestimmter Warenarten große Vorteile bieten können, bisher nicht möglich.

Aufgabe der Erfindung war es daher, eine Vorrichtung zur Trennung mehrphasiger wasserhaltiger Lösemittelgemische zur Verfügung zu stellen, z.B. für Textilreinigungsanlagen, mit der eine wirksame Abtrennung des Wassers auch bei geringen Dichteunterschieden zum organischen Lösemittel möglich ist. Als ein geringer Dichteunterschied wird hierbei insbesondere ein Unterschied von weniger als 100 kg/m³ verstanden.

Diese Aufgabe wird mit einer Vorrichtung mit den Merkmalen des Anspruchs 1 gelöst. Die Unteransprüche 2 bis 6 beinhalten vorteilhafte Ausgestaltungen der Vorrichtung.

Indem eine Zuleitung des Schwerkraftabscheiders mit dem Auslass mindestens eines Koaleszenzabscheiders verbunden ist und hierdurch stromaufwärts vom Schwerkraftabscheider ein Koaleszenzabscheider vorgesehen ist, werden im Kondensat, das bei der Rückgewinnung der für die Textilreinigung verwendeten Lösemittel anfällt, zunächst größere Tröpfchen von Wasser bzw. organischem Lösemittel erzeugt. Wird das Lösemittelgemisch, das nun bereits Tröpfchen (normalerweise aus Wasser) enthält, die im Vergleich zum Kondensat unmittelbar nach dessen Niederschlagung eine wesentlich erhöhte Größe aufweisen, einem Schwerkraftabscheider zugeführt, so hat sich gezeigt, dass nun auch bei geringen Dichteunterschieden eine Abscheidegeschwindigkeit erreicht wird, die für eine praktische Anwendung ausreichend ist. Durch die Erhöhung der Abscheidegeschwindigkeit werden andererseits kleinere Abmessungen des Schwerkraftabscheiders ermöglicht.

Unter Koaleszenz versteht man das vollständige Vereinigen von Blasen oder Tropfen in einem Fluid nach deren Annäherung. (vgl."ABC Verfahrenstechnik", VEB Verlag Leipzig, 1979). Voraussetzung für dieses vollständige Vereinen ist die gegenseitige Berührung zwischen den Teilchen und das Zerreißen der zwischen den Teilchen befindliche Schicht.

Zur Erhöhung der Tröpfchengröße hat sich als geeignet herausgestellt, dass der Koaleszenzabscheider z.B. mit einem offenporigen lösemittelbeständigen Schaum gefüllt ist. Insbesondere die Verwendung des Materials Polyurethan-/Polyesterschaum hat sich als sehr geeignet erwiesen. Die Porengröße des Schaumes beträgt dabei vorzugsweise zwischen 440 µm und 520 µm.

Eine weitere Verbesserung der Trennung von wässriger und organischer Phase wird erreicht, wenn eine Umlaufleitung zwischen Schwerkraftabscheider und Koaleszenzabscheider vorgesehen ist. Über diese Umlaufleitung kann der Anteil des Lösemittelgemisches, in dem eine Auftrennung in wässriges und organisches Lösemittel noch nicht in ausreichendem Maße stattgefunden hat, wieder zum Koaleszenzabscheider zurückgeführt werden, wo wiederum eine Vergrößerung der Tröpfchengröße eintritt. Der Einlass der Umlaufleitung ist vorzugsweise in einem mittleren Bereich des Schwerkraftabscheiders angeordnet, in dem während des Betriebs unvollständig getrenntes Gemisch vorliegt.

Die Menge des Lösemittelgemisches, das erneut in den Koaleszenzabscheider zurückgeführt wird, wird vorteilhaft so gesteuert, dass am Ausgang des Schwerkraftabscheiders für das organische Lösemittel kein bzw. nur eine geringe Menge an Wasser austritt. Für diesen Zweck kann ein Sensor, z.B. auf der Grundlage einer Leitfähigkeitsmessung oder einer Trübungsmessung, im Schwerkraftabscheider vorgesehen sein. Der Sensor ist dabei so angeordnet, dass er in dem Fall, dass Wasser in den Ausgang des Schwerkraftabscheiders oder in dessen Nähe geführt werden, ein Signal auslöst. Dieses Signal führt zur Öffnung eines Ventils, woraufhin dann der Teil des Lösemittelgemisches, in dem noch keine ausreichende Auftrennung in wässrige und organische Phase stattgefunden hat, z.B. mit Hilfe einer Pumpe wieder dem Koaleszenzabscheider zugeführt wird.

Durch die Zuleitung des Lösemittelgemisches vom Koaleszenzabscheider in den Schwerkraftabscheider können im Schwerkraftabscheider Turbulenzen erzeugt werden. Um die Abführung möglichst reinen Lösemittels aus dem Schwerkraftabscheider zu erreichen ist vorgesehen, dass die zwischen dem Koaleszenzabscheider und dem Schwerkraftabscheider vorgesehene Zuleitung vertikal beabstandet zur Oberfläche des Lösemittels und vertikal beabstandet zum Boden des Schwerkraftabscheiders in den Schwerkraftabscheider einmündet. Durch Vergrößerung der Füllhöhe (= Bauhöhe) des Schwerkraftabscheiders kann die Verweilzeit des Lösemittel/Wassergemisches erhöht werden, was für sehr geringe Dichteunterschiede zwischen der polaren und der nicht polaren Phase von besonderem Vorteil ist.

Bei sehr geringen Dichteunterschieden zwischen organischem Lösemittel und Wasser ist es ebenso vorteilhaft, wenn durch einen zweiten Schwerkraftabscheider eine Vergrößerung der Füllhöhe und damit eine längere Verweilzeit erzielt wird. Mit einer zweiten Zuleitung, die zwischen erstem und zweitem Schwerkraftabscheider vorgesehen ist und so angeordnet ist, dass eine Lösemittelphase, vorzugsweise die organische Lösemittelphase, aus dem ersten Schwerkraftabscheider dem zweiten Schwerkraftabscheider zugeführt wird, kann der erforderliche Zuwachs der Füllhöhe erreicht werden. Die Zuführung kann insbesondere nach dem Prinzip der kommunizierenden Röhren erfolgen.

Im ersten Schwerkraftabscheider werden durch die Zuführung des Lösemittelgemisches aus dem Koaleszenzabscheider und die fakultativ vorgesehene Umlaufleitung vom ersten Schwerkraftabscheider zum Koaleszenzabscheider Turbulenzen im ersten Schwerkraftabscheider erzeugt. Dadurch und durch die im Lösemittelgemisch enthaltenen Tenside und andere oberflächenaktive Stoffe besteht bei sehr geringen Dichteunterschieden zwischen wässrigem und organischem Lösemittel die Möglichkeit, dass das aus dem Schwerkraftabscheider abgeführte organische Lösemittel noch Wasser enthält. Es ist daher vorteilhaft, wenn ein zweiter Schwerkraftabscheider vorgesehen ist, in dem eine weitere Phasentrennung eintreten kann. Dabei ist auf möglichst geringe Turbulenzen sowie vorzugsweise eine geringe Strömungsgeschwindigkeit zu achten. Besonders vorteilhaft stehen daher erster und zweiter Schwerkraftabscheider nach dem Prinzip der kommunizierenden Röhren in Verbindung. Die abgeschiedene wässrige Phase wird wieder dem ersten Schwerkraftabscheider zugeführt. Wenn es der zur Verfügung stehende Platz erlaubt, kann statt der Installation eines zweiten Schwerkraftabscheiders die Bauhöhe des ersten Schwerkraftabscheiders entsprechend vergrößert werden.

Die erfindungsgemäße Vorrichtung eignet sich besonders zur Auftrennung eines Lösemittelgemisches aus der Textilreinigung. Besonders vorteilhaft lässt sich die Vorrichtung einsetzen, wenn das Lösemittelgemisch aus Wasser und einem organischen Lösemittel vergleichbarer Dichte, insbesondere Propylenglycolether (Dichte 960 kg/m³) oder einem Polydimethylsiloxan (Dichte ca. 960 kg/m³), gebildet ist.

Ein weiterer Vorteil wird erreicht, wenn die abgetrennte, sich im unteren Teil des Schwerkraftabscheiders angesammelte Phase mit der höheren Dichte automatisch abgeführt wird. Bei dieser Phase kann es sich insbesondere um Wasser handeln. Dieses Ziel wird dadurch erreicht, dass mittels eines Sensors im unteren Teil des Schwerkraftabscheiders festgestellt wird, ob sich das Wasser vom organischen Lösemittel getrennt hat. Wenn das der Fall ist, wird durch den Sensor ein Öffnen des Ablaufventils und damit eine Ableitung des angesammelten Wassers bewirkt. Der Sensor kann beispielsweise auf Basis einer Leitfähigkeitsmessung oder einer Trübungsmessung arbeiten.

Eine weitere Aufgabe der Erfindung bestand darin, ein Verfahren zur Verfügung zu stellen, mit dem eine Auftrennung eines wasserhaltigen mehrphasigen Lösemittelgemisches möglich ist, wobei die Bestandteile des Gemisches eine vergleichbare Dichte aufweisen.

Diese Aufgabe wird durch ein Verfahren mit den Merkmalen des Anspruchs 8 gelöst. Die Ansprüche 9 und 10 enthalten vorteilhafte Ausführungsformen des Verfahrens.

Das erfindungsgemäße Verfahren umfasst die Schritte:
Zuführen eines auskondensierten mehrphasigen wasserhaltigen Lösemittelgemisches zu einem Koaleszenzabscheider;
Vergrößerung des Volumens der Tröpfchen, vorzugsweise der Wassertröpfchen, im Koaleszenzabscheider;
Zuführen des Lösemittelgemisches mit vergrößertem Tröpfchenvolumen zu einem Schwerkraftabscheider;
Auftrennen des Lösemittelgemisches im Schwerkraftabscheider in eine erste Phase, die überwiegend oder ausschließlich aus organischem Lösemittel besteht (Phase A), in eine zweite Phase, die ein Gemisch aus organischem Lösemittel und Wasser enthält (Phase B), sowie in eine dritte Phase, die überwiegend aus Wasser besteht (Phase C).

Bei sehr geringen Dichteunterschieden ist es vorteilhaft, wenn die zweite Phase zwischen Schwerkraftabscheider und Koaleszenzabscheider im Umlauf geführt wird, vorzugsweise gesteuert über einen Sensor. Der Sensor erfasst z.B. den Wassergehalt der vorliegenden Phase. Des weiteren kann eine verbesserte Phasentrennung durch Vergrößerung der Füllhöhe des Schwerkraftabscheiders erzielt werden.

Der Wassergehalt im organischen Lösemittel lässt sich weiter verringern, wenn die erste Phase, vorzugsweise mit geringer Strömungsgeschwindigkeit und niedriger Turbulenz und insbesondere nach dem Prinzip der kommunizierenden Röhren, einem zweiten Schwerkraftabscheider zugeführt wird. Im zweiten Schwerkraftabscheider erfolgt eine weiter Auftrennung der Lösemittel.

Die Erfindung wird im Folgenden unter Bezugnahme auf die Figuren näher erläutert. Es zeigen:
- Fig. 1: einen schematischen Aufbau der erfindungsgemäßen Vorrichtung in einer Ausführung, die für ein organisches Lösemittel mit einer Dichte von weniger als 1000 kg/m³ geeignet ist, bestehend aus einer Kombination von Koaleszenzabscheider und einem Schwerkraftabscheider;
- Fig.2: einen schematischen Aufbau der erfindungsgemäßen Vorrichtung in einer Ausführung, die für ein organisches Lösemittel mit einer Dichte von weniger als 1000 kg/m³ geeignet ist, bestehend aus einer Kombination von Koaleszenzabscheider und zwei Schwerkraftabscheidern.

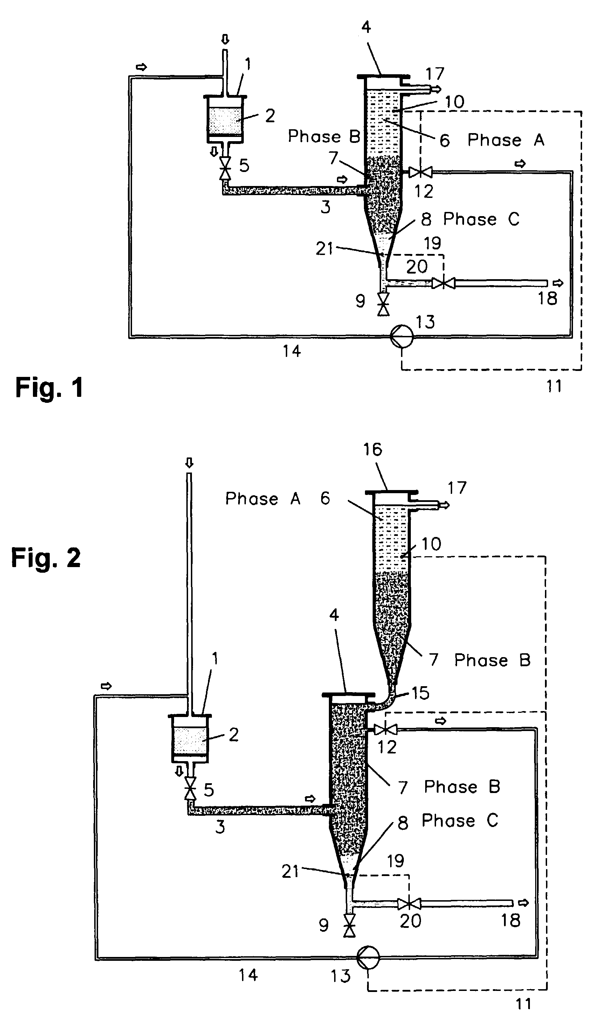

Figur 1 zeigt eine Ausführungsform der erfindungsgemäßen Vorrichtung für ein Lösemittelgemisch aus Wasser und einem organischen Lösemittel, das eine geringere Dichte als Wasser aufweist. Die erfindungsgemäßen Anlagen eignen sich besonders zur Auftrennung mehrphasiger Lösemittelsysteme, in denen der Dichteunterschied zwischen den einzelnen Lösemittelkomponenten weniger als 100 kg/m³ beträgt.

Anlagen zum chemischen Reinigen von Textilien umfassen Reinigungs- und Trocknertrommel, Heizung und Warmluftzuführung zum Trocknen, Kondensator für das Lösemittel bzw. Lösemittel-/Wassergemisch, gegebenenfalls eine Destillationsblase mit Kondensator. Die Figuren 1 und 2 beschränken sich in ihrer Darstellung auf denjenigen Teil einer solchen Reinigungsanlage, in dem die Auftrennung des Gemisches aus Wasser und organischem Lösemittel erfolgt.

Das vom Kondensator (nicht dargestellt) kommende Lösemittel-/Wassergemisch gelangt zunächst in den Koaleszenzabscheider 1. Das Lösemittelgemisch weist dabei im allgemeinen sehr kleine Wassertröpfchen im organischen Lösemittel auf. Im Koaleszenzabscheider 1 durchdringt das Gemisch eine Füllung 2, die z.B. aus lösemittelbeständigem und wasserbeständigem Schaumstoff besteht, wodurch eine Vergrößerung der Wassertröpfchen eintritt und sich das Wasser weitgehend vom organischen Lösemittel trennt.

In kontinuierlichem Fluss gelangt danach das Gemisch aus Wasser und organischem Lösemittel über eine Zuleitung 3 zu einem Schwerkraftabscheider 4. Die Zuleitung 3 mündet dabei so in den Schwerkraftabscheider 4, dass die Zuleitung unterhalb der Flüssigkeitsoberfläche erfolgt und die Abscheidung des organischen Lösemittels möglich ist. Der Zustrom in den Schwerkraftabscheider 4 kann über das in der Zuleitung 3 angeordnete regelbare Ventil 5 geregelt werden.

Im Schwerkraftabscheider 4 erfolgt eine Auftrennung des Gemisches aus organischem Lösemittel und Wasser in eine oben liegende Phase A (6), die überwiegend aus organischem Lösemittel besteht, und eine mittlere Phase B (7), die aus einer Mischung von Wasser und organischem Lösemittel besteht. Schließlich entsteht noch eine untere Phase C (8), die überwiegend aus Wasser besteht.

Die Höhe der mittleren Phase B wird mit Hilfe eines im Inneren des Schwerkraftabscheiders 4 angeordneten Sensors 10 kontrolliert, z.B. durch Leitfähigkeitsmessung oder Trübungsmessung. Übersteigt die Phase B ein Maximum, gibt der Sensor 10 über die Steuerleitungen 11 ein Signal an das Ventil 12 und die Pumpe 13, die hintereinander in einer Umlaufleitung 14 angeordnet sind. Die Umlaufleitung 14 führt vom Schwerkraftabscheider 4 zum Koaleszenzabscheider 1. Auf diese Weise wird das Gemisch aus Wasser und organischem Lösemittel über die Umlaufleitung 14 wieder zum Koaleszenzabscheider 1 geführt. Damit wird ein Kreislauf zwischen dem Schwerkraftabscheider 4 und dem Koaleszenzabscheider 1 geschlossen, in dem die Mischung aus Wasser und organischem Lösemittel zirkulieren kann. Durch den Koaleszenzabscheider kommt es erneut zu einer Vergrößerung der Wassertröpfchen mit der Folge einer beschleunigten Trennung zwischen Lösemittel und Wasser, und die Höhe der Phase B im Schwerkraftabscheider 4 wird reduziert. Damit wird vermieden, dass sich die Phase B bis zur Abflussleitung 17 am oberen Ende des Schwerkraftabscheiders verschieben kann.

Die Phase A, die sich bereits vom Wasser getrennt hat, gelangt über die Abflussleitung 17 zur weiteren Verwendung zurück in die Reinigungsanlage.

Die Höhe der im unteren Teil des Schwerkraftabscheiders 4 angesammelten Phase C wird mit einem Sensor 21 z.B. durch Leitfähigkeitsmessung oder Trübungsmessung überwacht. Übersteigt der Flüssigkeitsspiegel der Phase C den Sensor, so wird über die Steuerleitung 19 vom Sensor 21 ein Steuerimpuls an das Ablassventil 20 gegeben. Das Ablassventil 20 ist in einer am Boden des Schwerkraftabscheiders 4 beginnenden Abflussleitung 18 angeordnet und öffnet so lange, bis der Sensor 21 ein erneutes Schließen des Ventils 20 veranlasst.

Optional zu dem beschriebenen, über den Sensor 21 gesteuerten Ablass der Phase C kann diese auch über das am Boden des Schwerkraftabscheiders 4 angeordnete Ablassventil 9 abgelassen werden.

Der in der Figur 2 dargestellte Aufbau der erfindungsgemäßen Vorrichtung in einer Ausführung, die für ein organisches Lösemittel mit einer Dichte von weniger als 1000 kg/m³ geeignet ist, besteht aus einer Kombination von einem Koaleszenzabscheider 1 und zwei Schwerkraftabscheidern 4, 16. Der zusätzliche Schwerkraftabscheider 16 ist über eine Zuleitung 15 angekoppelt, die am oberen Ende des ersten Schwerkraftabscheiders 4 beginnt und am Boden des zweiten Schwerkraftabscheiders 16 endet. Der oben beschriebene Sensor 10, welcher die Höhe der Phase B überwacht und die Steuerorgane (Ventil 12, Pumpe 13) in der Umlaufleitung 14 ansteuert, ist in der Seitenwand des zweiten Schwerkraftabscheiders 16 angeordnet.

Verfahrensmäßig unterscheidet sich die Vorrichtung nach Figur 2 wie folgt von der Vorrichtung nach Figur 1:
Anstelle der in Fig. 1 dargestellten Entnahme über die Abflussleitung 17 wird bei der Vorrichtung nach Fig. 2 die Lösemittel-/Wassermischung (Phase B) nach dem Prinzip kommunizierender Röhren über die Zuleitung 15 in den zweiten Schwerkraftabscheider 16 geleitet.

In diesem nahezu strömungslosen Abscheider 16 können sich noch vorhandene Restmengen an Wasser, die nicht im organischen Lösemittel gelöst sind, abscheiden. Dieses Wasser kann über die nunmehr als Rückführleitung vom zweiten zum ersten Schwerkraftabscheider dienende Leitung 15 wieder dem ersten Schwerkraftabscheider 4 zugeführt werden. Das von ungebundenem Wasser befreite Lösemittel 6 fließt durch die Abflussleitung 17 zurück in einen Lösemitteltank (nicht dargestellt) zur Weiterverwendung für die Reinigung. Der Sensor 10 ist in diesem Fall im zweiten Schwerkraftabscheider 16 plaziert. Der Verfahrensablauf ist im weiteren identisch mit dem oben beschriebenen Vorgehen.

In der Figur 1 und der Figur 2 wurde der Aufbau der erfindungsgemäßen Vorrichtung für die Ausführungsform beschrieben, in der das organische Lösemittel eine geringere Dichte als Wasser besitzt, also die organische Phase im Gemisch oberhalb der Wasserphase angeordnet ist. Ausgehend von der Beschreibung und den Angaben in der Einleitung und den Patentansprüchen ist es dem Fachmann jedoch ohne erfinderisch tätig werden zu müssen möglich, die Vorrichtung für den Fall auszugestalten, dass die organische Phase eine höhere Dichte als die Wasserphase aufweist.

### Bezugszeichen:

- 1: Koaleszenzabscheider
- 2: Füllung
- 3: Zuleitung
- 4: Schwerkraftabscheider
- 5: Ventil
- 6: Phase A
- 7: Phase B
- 8: Phase C
- 9: Ablassventil
- 10: Sensor
- 11: Steuerleitung
- 12: Ventil
- 13: Pumpe
- 14: Umlaufleitung
- 15: Zuleitung
- 16: Schwerkraftabscheider
- 17: Abflussleitung
- 18: Abflussleitung
- 19: Steuerleitung
- 20: Ventil
- 21: Sensor

## Patentansprüche

1. Vorrichtung zur Trennung mehrphasiger wasserhaltiger Lösemittelgemische mit einem Schwerkraftabscheider (4),
dadurch gekennzeichnet, dass eine Zuleitung (3) des Schwerkraftabscheiders (4) mit dem Auslass mindestens eines Koaleszenzabscheiders (1) verbunden ist.

2. Vorrichtung nach Anspruch 1,
dadurch gekennzeichnet, dass die Zuleitung (3) des Schwerkraftabscheiders (4) in einem vertikal mittleren Bereich des Schwerkraftabscheiders einmündet, der vertikal beabstandet zum Boden der Schwerkraftabscheiders und während des Betriebs vertikal beabstandet zur Oberfläche des zu trennenden Gemisches ist.

3. Vorrichtung nach Anspruch 1 oder 2,
dadurch gekennzeichnet, dass sie einen zweiten Schwerkraftabscheider (16) enthält mit einer zweiten Zuleitung (15), die so zwischen den beiden Schwerkraftabscheidern (4, 16) angeordnet ist, dass eine Gemischphase, vorzugsweise die Lösemittelphase, aus dem ersten Schwerkraftabscheider (4) dem zweiten Schwerkraftabscheider (16) zugeführt werden kann, vorzugsweise nach dem Prinzip der kommunizierenden Röhren.

4. Vorrichtung nach mindestens einem der Ansprüche 1 bis 3,
dadurch gekennzeichnet, dass mindestens einer der Schwerkraftabscheider (4) über eine Umlaufleitung (14) mit dem Koaleszenzabscheider (1) verbunden ist, wobei in der Umlaufleitung vorzugsweise eine zum Koaleszenzabscheider (1) gerichtete Umlaufpumpe (13) angeordnet ist.

5. Vorrichtung nach Anspruch 4,
dadurch gekennzeichnet, dass in mindestens einem der Schwerkraftabscheider (4, 16) ein Sensor (10) angeordnet ist, der im Schwerkraftabscheider vorzugsweise eine elektrische Leitfähigkeitsmessung und/oder eine Trübungsmessung durchführen kann, und der mit Steuerorganen (12, 13) in der Umlaufleitung (14) verbunden ist.

6. Vorrichtung nach mindestens einem der Ansprüche 1 bis 5,
dadurch gekennzeichnet, dass mindestens einer der Schwerkraftabscheider (4) eine Abflussleitung (18) mit einem Ablassventil (20) aufweist sowie einen Sensor (21), der im Schwerkraftabscheider vorzugsweise eine elektrische Leitfähigkeitsmessung und/oder eine Trübungsmessung durchführen kann und der über eine Steuerleitung (19) mit dem Ablassventil (20) verbunden ist.

7. Verwendung der Vorrichtung nach mindestens einem der Ansprüche 1 bis 6 zur Auftrennung eines Gemisches von Wasser mit mindestens einem organischem Lösemittel vergleichbarer Dichte, vorzugsweise mit Glykolether, wobei das Gemisch vorzugsweise aus der Textilreinigung stammt.

8. Verfahren zur Trennung mehrphasiger wasserhaltiger Lösemittelgemische, vorzugsweise von Gemischen aus Stoffen geringer Dichteunterschiede, insbesondere von Lösemittelgemischen aus der Textilreinigung, enthaltend die Schritte
a) Zuführung des zu trennenden Gemisches zu einem Koaleszenzabscheider (1);
b) Vergrößerung des Volumens der Tröpfchen einer Gemischkomponente, vorzugsweise des Wassers, im Koaleszenzabscheider (1);
c) Zuführen des Lösemittelgemisches mit vergrößertem Tröpfchenvolumen zu einem Schwerkraftabscheider (4);
d) Auftrennung des Lösemittelgemisches im Schwerkraftabscheider (4) in eine erste Phase A (6), die überwiegend aus Lösemittel besteht, in eine zweite Phase B (7), die ein Gemisch aus Wasser und Lösemittel enthält, und in eine dritte Phase C (8), die überwiegend aus Wasser besteht.

9. Verfahren nach Anspruch 8,
dadurch gekennzeichnet, dass die zweite Phase B (7) vom Schwerkraftabscheider (4) zum Koaleszenzabscheider (1) gepumpt wird, wobei das Pumpen vorzugsweise über einen Sensor (10) gesteuert wird, der den Stand mindestens einer Phase (7) erfasst.

10. Verfahren nach Anspruch 8 oder 9,
dadurch gekennzeichnet, dass die dritte Phase C (8) aus dem Schwerkraftabscheider (4) abgelassen wird, wobei das Ablassen vorzugsweise über einen den Stand der dritten Phase C (8) erfassenden Sensor (21) gesteuert wird.
